# EUROPEAN PATENT SPECIFICATION

(11) **EP 0 593 430 B1**
(45) Date of publication and mention of the grant of the patent: **05.03.1997**
(21) Application number: 90912121.2
(22) Date of filing: 15.08.1990
(51) Int. Cl.: B29C 63/10, B02C 17/02

(54) **PAINT ROLLER AND APPARATUS AND METHOD FOR MAKING SAME**
ANSTRICHROLLE UND VERFAHREN ZUR HERSTELLUNG
ROULEAU POUR LA PEINTURE, APPAREIL ET METHODE DE FABRICATION

(30) Priority: 15.08.1989 US 394073; 25.04.1990 US 512795
(43) Date of publication of application: 27.04.1994
(73) Proprietor: SEKAR, Chandr, Brooklyn, NY 11207 (US)
(72) Inventor: SEKAR, Chandr, Brooklyn, NY 11207 (US)
(74) Representative: Marx, Lothar, Dr.
(86) International application number: US9004613
(87) International publication number: WO9102604

(56) References cited:
- ES-A- 2 010 431
- FR-A- 2 093 060
- US-A- 2 948 200
- US-A- 3 457 130
- US-A- 3 700 520
- US-A- 3 761 335
- US-A- 4 165 956
- US-A- 4 689 003
- US-A- 4 692 975
- PATENT ABSTRACTS OF JAPAN vol. 4, no. 49 (M-7)(531) & JP-A-55 19 511(NIPPON KOKAN K.K.) 12 February 1980

## Description

### BACKGROUND OF THE INVENTION

### 1. Field of the Invention

This invention pertains to a method and apparatus for making paint rollers of the type used for applying paint to walls and the like.

### 2. Prior Art

Paint rollers are widely used by professionals and amateurs for applying paint to walls, ceilings, and other surfaces. Typically the roller is used with an applicator having a handle terminating in a rotatable member to which the roller is secured. The roller itself comprises two main components, a core and a paint absorbing cover. The core is typically paper or plastic, while the cover may be wool, polyester, etc. Generally speaking, the methods used for forming the core and for securing the cover to the core determine whether the roller is reusable, as paint solvents such as turpentine, mineral spirits, etc. are also solvents for many adhesives.

To speed production and reduce costs, paint rollers are manufactured using an automated assembly line. For example, according to US-A-3,226,799, a disposable roller is made by first feeding three chipboard paper strips at an angle to a mandril for overlapping, helical winding to form an endless, belt driven core. The paper strips are supplied in rolls for mounting on spindles for continuous feeding, and a continuous adhesive stream is applied to the outer surfaces of the strips as they feed off the rollers such that the strips adhere together as they are helically wound to form the core. Because the roller is intended as a throwaway, the adhesive is not critical, and an inexpensive adhesive, such as a water soluble white glue, is used. As the endless core is belt driven down the line, it reaches a second adhesive applicator where a continuous adhesive stream is applied to the outer surface of the core after which a continuous strip of the cover material, such as polyester, is helically wound on to the core where it is secured by the adhesive. All that remains is to cut the resulting endless roller down to usable sizes, which is usually accomplished in two steps, first using a fly away cutter to cut, e.g., 162,6 cm (64 inch) stock, and then using a recutter to cut the stock into lengths of, e.g., 17,8 or 22,9 cm (7 or 9 inches). The rollers The rollers thus formed may not be reused, as the adhesive which binds the core and secures the cover to the core is soluble in paint solvents, and consequently any attempt to clean the roller leads to unravelling of the core and separation of the core from the cover.

If reusable rollers are desired, phenolic impregnated paper strips are substituted for the chipboard strips in the process described above, and a thermosetting glue is used for securing the core. Thereafter, the core is heated in a multi-stage infrared heater, after which a hot melt glue is applied to the core's outer surface. The rollers are then completed as before, i.e. by helically winding the fabric cover on to the core and then cutting the resulting endless roller into usable lenghts. The obvious drawback of reusable cores formed in this manner is that they require a longer assembly line, due to the need of a heater, and because the phenolic must be heated to a predetermined temperature, there is an obvious trade off between the number of heater stages and the speed of the line. Moreover, while the resulting rollers are termed reusable because they do not separate when placed in paint solvents, prolonged exposure to such solvents, e. g. about two days, does result in separation.

A method and an apparatus for winding and cementing tubes or hoses is disclosed in U.S. Patent No. 2,948,200. This known apparatus for producing a flexible tube comprises a stationary winding mandrel, a plurality of reels, each reel adapted to carry a supply of strips of flexible material and disposed at an oblique angel to the mandrel, means for storing and feeding a liquid adhesive to said material at a point intermediate at least one of said reels and said mandril, means for revolving said reels and said adhesive storing and feeding means about said stationary mandrel. By using this apparatus a helically wound tube is formed on said mandril from said strips when the strips are applied to the mandril and drawn off the reels upon revolution thereof.

In the operation of this preknown apparatus, strips are drawn off said reels, are wound around the stationary mandril and at first fed forwardly by hand until they are grasped by threads of a grooving and feeding mechanism. Thereafter the entire operation continues automatically, the reels revolve around the mandril, and the strips, during their passage from the reels to the mandril, are coated with liquid adhesive which is pumped by pumps from a container into the likewise revolving nozzle members and is then passed through nozzle openings and sprayed upon one side of said strips. The speed of revolution of said reels is in accord with the feeding speed of the wound tube which results from the opposite rotation of threads along the tube.

Another method for the wiping transfer of a bonding agent onto a longitudinal member and an underlapping margin of a tape on the longitudinal member is disclosed in U. S. Patent 3,761,335.

This preknown method includes the steps of causing relative longitudinal movement between said longitudinal member and said tape along a path of wrapping movement; connecting a free end of said tape to said longitudinal member; causing relative rotary movement between said longitudinal member and said tape to wrap said tape about said longitudinal member; feeding said bonding agent to said longitudinal member ahead of said last wrapped turn of said tape on said longitudinal member; picking up said bonding agent on said longitudinal member, transferring said bonding agent on said longitudinal member around said longitudinal member adjacent said last wrapped turn of said tape on said longitudinal member preparatory for the application of the next wrapped turn of said tape, tranferring said bonding agent on said longitudinal member onto said underlapping margin preparatory for the wrapping of the overlapping margin of said next wrapped term of said tape thereon, and substantially filling said transitional cavity with said bonding agent; and picking up said bonding agent on said longitudinal member with a wiper member, transferring said bonding agent on said longitudinal member around said longitudinal member adjacent said last wrapped turn of said tape on said longitudinal member by said wiper member, transfering said bonding agent on said longitudinal member onto said underlapping margin by said wiper member, and substantially filling said transitional cavity with said bonding agent by said wiper member.

Another reusable roller is disclosed in U. S. Patent No. 4, 692,975 issued to Garcia. Rather than using helically wound strips to form the core, the Garcia roller is formed using a core comprised of preformed thermoplastic (e.g. polypropylene) tubular stock. With the core mounted on a rotating spindle, a movable carriage mounted at an angle to the spindle feeds a continuous strip of fabric, the carriage moving parallel to the spindle in timed relation to its rotation so that the fabric strip is wound on the plastic core in a tight helix. Also mounted to the movable carriage is a heat source for heating-softening the thermoplastic core just in advance of the point where the fabric strip is applied, such that the fabric is bonded to the core as it is wound thereon. One advantage of the roller disclosed in the Garcia patent is that it is reusable, as the bond formed between cover and core is a strong one not subject to separation from exposure to paint solvents. Another advantage is that the manufacturing process does not require the application of an adhesive to bond the cover to the core. There are, however, drawbacks. For one, while prior art techniques use rolls of, e.g., chipboard or paper, the Garcia process requires preformed thermoplastic tubular cores which are considerably bulkier than rolls, more expensive to transport, and more difficult to handle. Another drawback is the anticipated speed limit of the Garcia process dictated by the necessity that the heater, which advances along the core just in front of the fabric strip, move slow enough to insure softening of the thermoplastic core, in the absence of which the fabric cover will not bond.

It is the object of the present invention to propose a method and an apparatus for making a paint roller as well as a paint roller which overcome the above mentioned drawbacks.

This object is achieved by the subjects as defined by claims 1, 7 and 12.

### SUMMARY OF THE INVENTION

In accordance with a first embodiment of the present invention, paint rollers are formed from one or more strips of thermoplastic material, preferably polypropylene, wound together in overlapping relation about a stationary mandril to form a core, to which a cover is applied. The thermoplastic strips comprising the core are bonded together by a thermoplastic material, again preferably polypropylene, which is applied to the strips in liquid form, as by sufficiently heating the polypropylene in a demand melter to liquefy it, and then feeding it to the strips via feed tubes extending from the melter. The thermoplastic strips are rapidly bonded to each other to form the core as the liquid polypropylene cools and sets. After the core is formed, an adhesive, preferably additional liquid polypropylene, is applied to the outer surface of the core whereupon a fabric cover, comprised for example of polyester, is wound about the core and bonded thereto as the liquid polypropylene cools and sets. The resulting roller is reusable owing to the strength of the polypropylene bonding, which resists separation upon immersion in paint solvents, even with exposure over several days.

The rollers of the invention are preferably formed using an assembly line process, which is simplified by the fact that the process for making the paint rollers of the invention uses many components common to prior art systems for making paint rollers. Furthermore, when an assembly line process is used, it is expected to be quite fast, as the polypropylene may be liquified at a location remote from the assembly line, whereby the process need not be slowed to accommodate on-line heating. Furthermore, because of the rapidity with which liquid polypropylene sets under ambient conditions, it is anticipated that the endless roller formed on the assembly line may be cut almost immediately after the fabric cover is applied, thereby allowing the assembly line to be kept quite short while still yielding a strongly bonded, reusable roller.

### BRIEF DESCRIPTION OF THE DRAWINGS

In the drawings:
FIG. 1 is a diagrammatic representation of an apparatus suitable for making rollers in accordance with a first embodiment of the present invention;
FIG. 2 is a perspective view of a roller made in accordance with the present invention; and
FIG. 3 is a sectional view taken substantially along line 3--3 in FIG. 2.

### DETAILED DESCRIPTION OF THE PREFERRED EMBODIMENT

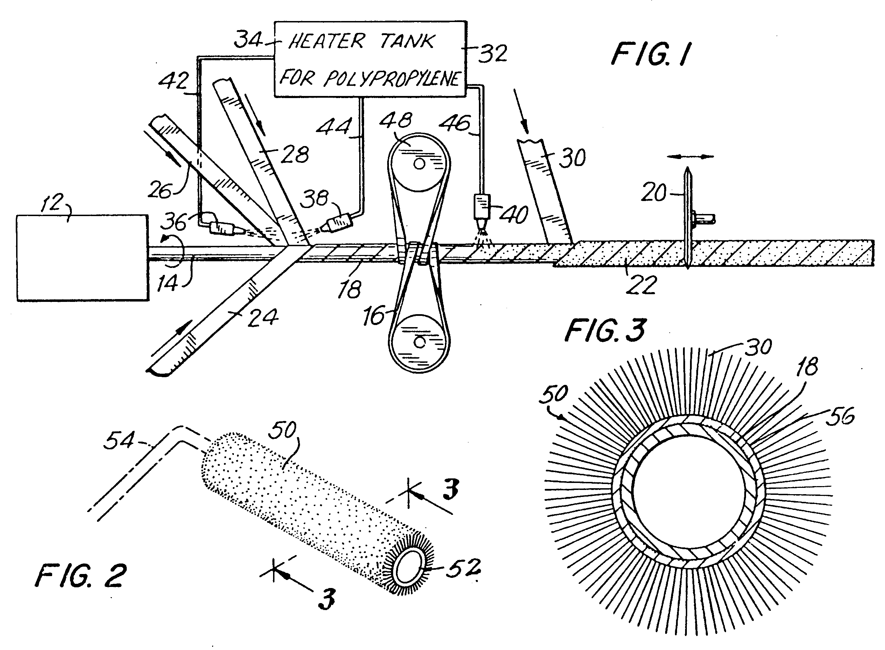

Referring now to the drawings, and initially to FIG. 1, an apparatus suitable for making rollers in accordance with a first embodiment of the present invention is generally designated at 10. One advantage of the apparatus 10 is that it incorporates several components common to widely used prior art systems, and hence is easily retrofitted. These components include a housing 12 supporting a stationary mandril 14, a driven belt 16 wound about the formed core 18 for advancing it to the right in FIG. 1, a flyaway cutter 20 for cutting the formed endless roller 22 into usable lengths, and journaled spindles (not shown) for supporting the three rolls (also not shown) from which the strips 24, 26, 28 and 30 are drawn. Components not found in prior art systems are a demand heater 32 for maintaining a liquid supply of thermoplastic material, preferably liquid polypropylene 34, applicators 36, 38 and 40 connected by, respectively, feed tubes 42, 44 and 46 to heater 32 for applying the liquid polypropylene at predetermined points in the process, and the use of thermoplastic strips 24, 26 and 28, again preferably polypropylene, to form the core 18.

An advantage of the invention is that it employs rolls of polypropylene strips which are easy to handle and readily substituted for the rolls of chipboard and paper strips common in prior art processes. As diagrammatically illustrated in FIG. 1, and in accordance with known techniques, three polypropylene strips 24, 26 and 28 are fed at an angle to the mandril 14, two from one side and one from the other. To start the process, and as is also known in the art, the free ends of the strips 24, 26 and 28, which are typically 2 11\16", 2 3\4" and 2 13\16" wide, are manually wound about the mandril 14 until they extend beyond the belt 16, at which point the belt is tightly wrapped about the strips and driven by activating driven wheel 48, whereupon the belt advances the formed core 18 to the right in FIG. 1 thereby continuously pulling fresh lengths of the polypropylene strips 24, 26 and 28 onto the stationary mandril 14. As shown, the strip 24 is fed over the mandril 14 and the strips 26, 28 are fed under the mandril such that all three strips are advanced to the right in FIG. 1 by the rotation of the belt 16, and preferably the strips 24, 26 and 28 are wound in tight helical paths.

Still referring to FIG. 1, the applicators 36, 38 apply liquid polypropylene from the demand melter 34 to the outer surfaces of the strips 26, 28 just before they are wound on the mandril 14. The demand melter is set to maintain its interior at a temperature sufficiently high to insure that the polypropylene therein is in liquid form. As the strips 24, 26 and 28 are wound onto the mandril in overlapping fashion by the advancing action of the belt 16, the liquid polypropylene is disposed between the overlapping strips, and because the strips are also comprised of polypropylene, the overlapping strips are cools and sets, thereby forming an integral endless core 18.

Next, additional liquid polypropylene is applied onto the outer surface of the core 18 by the applicator 40 which is situated just to the right of the belt 16 in FIG. 1. Immediately thereafter, the fabric cover 30, which may comprise any of the conventional materials now in use, such as polyester, is wound onto the core 18, whereupon it is rapidly bonded to the core as liquid polypropylene cools and sets. Again, because the core is also formed of polypropylene, the strong bond is formed between the core 18 and the fabric cover 30. It will be appreciated that in accordance with known techniques, winding of the fabric cover 30 onto the core 18 is started manually, just like the strips 24, 26 and 28, and that fresh lengths of the fabric strip 30 are then continuously pulled onto the core 18 by the advancement of the core 18 to the right as effected by the belt 16. Again, the cover strip 30 is preferably wound in a tight helical path about the core.

At this point, all that remains is to cut the now formed endless roller 22 into usable lengths. Because the polypropylene bonds which secure the core 18 and hold the fabric cover 30 to the core set rapidly with the cooling of the liquid polypropylene, it is anticipated that the flyaway cutter for cutting the endless roller 22 may be positioned quite close to the ontake of the fabric cover 30. The actual position of the flyaway cutter 20 can, of course, be adjusted as necessary to insure that the cutting operation is not effected before the bonds set. As is common, the flyaway cutter may be adjusted to cut the endless roller 22 into 64" stock, which may then be recut to the usual 7" and 9" sizes.

A finished roller 50 in accordance with the invention is shown in FIG. 2, and in cross-section in FIG. 3. The roller 50 may be used in the same manner as prior art rollers, namely, as a replacement element or, with the addition of end pieces 52 and a handle 54, as part of a complete roller assembly. In FIG. 3, 56 represents the polypropylene bond joining the fabric cover 30 to the core 18. Because polypropylene bonds are not soluble in paint solvents, the rollers 50 produced in accordance with the invention are reusable. Indeed, because the core 18 itself comprises polypropylene, the roller 50 defines a substantially integral assembly, and it is expected that separation of the fabric 30 from the core 18 will not occur even if the roller is exposed to a paint solvent over a period of several days.

Apart from the advantage of producing extremely well bonded, reusable rollers, the invention provides several manufacturing advantages. For one, because of the rapidity with which the polypropylene bonds set, the assembly line can be kept quite short, with the flyaway cutter, the final component on the line, positioned close to the ontake of fabric strip 30. Also, because the polypropylene is preheated to a liquid state in the heater 32, which may be remotely located, there is no need for a heating element in proximity to the assembly line, and consequently the line need not be slowed to accommodate on-line heating. Therefore, it is anticipated that the line can be run quite fast, thereby increasing production and reducing unit cost. Another advantage, noted above, is that the method of the invention forms the core and cover from strips, just like the prior art methods, and therefore is easily retrofitted to existing systems using several of their components which, of course, is less expensive than a new installation. Also, as compared with those prior art systems which utilize prefabricated tubular stock for the roller core, the present invention's reliance on polypropylene strips is superior, as strips, which come in rolls, are less bulky and easier to handle. Their lesser bulk also reduces transportation costs.

In place of fabric cover 30 a flocking head (not shown) may be used to apply a suitable cover material, such as blown-on fibers, to core 18.

## Claims

1. A method for making a paint roller comprising:
- winding one or more strips in overlapping relation and in helical path onto a mandril and advancing said wound strips in a direction coaxial with said mandril, thereby forming a tubular core,
- applying an adhesive to an outer surface of said core, and
- applying a cover about said core over said adhesive, thereby bonding said cover to said core and forming said roller,
characterized by the following features
- forming said tubular core (18) of thermoplastic strips (24, 26, 28), and
- applying the same liquid thermoplastic material to said one or more strips (24, 26, 28), thereby bonding said strips (24, 26, 28) together.

2. The method of claim 1, wherein the adhesive comprises a liquid thermoplastic material.

3. The method of claim 1 or 2, wherein the adhesive and the thermoplastic material comprise polypropylene.

4. The method of one of the claims 1 to 3, wherein said advancing step comprises wrapping a belt (16) around the core (18) and rotating the belt (16).

5. The method of one of the claims 1 to 4, wherein said step of applying a cover comprises winding a cover strip (30) about the core.

6. The method of one of the claims 1 to 4, wherein said step of applying a cover comprises blowing fibers onto the core.

7. An apparatus for making paint rollers (50) comprising:
- means for winding one or more strips (24, 26, 28) in overlapping relation and in helical path onto a mandril (14) and advancing said wound strips (24, 26, 28) in a direction coaxial with said mandril (14), thereby forming a tubular core (18),
- means (40) for applying an adhesive on the outer surface of said core (18), and
- means for applying a cover (30) about said core (18) over said adhesive, thereby bonding said cover (30) to said core (18) and forming said roller (50),
characterized by the following features
- said strips (24, 26, 28) for forming said tubular core (18) are thermoplastic strips (24, 26, 28), and
- the same liquid thermoplastic material is applied to said one ore more strips (24, 26, 28) by a thermoplastic liquid supplying means (36,38), thereby bonding said strips (24, 26, 28) together.

8. The apparatus of claim 7, wherein the adhesive comprises a liquid thermoplastic material.

9. The apparatus of claim 7 or 8, wherein the adhesive and the thermoplastic material comprise polypropylene.

10. The apparatus of claims 7 to 9, wherein said cover applying means applies a strip (30) about the core.

11. The apparatus of claims 7 to 9, wherein said cover applying means blows fibers onto said core.

12. A paint roller (50) comprising:
- a tubular core (18) formed by winding one or more strips (24, 26, 28) in overlapping relation and in helical path onto a mandril and advancing said wound strips in a direction coaxial with said mandril,
- an adhesive applied on the outer surface of said core (18), and
- a cover (30) about said core (18) over said adhesive bonding said cover (30) to said core (18) for forming said roller (50)
characterized by the following features
- said tubular core (18) is formed of thermoplastic strips (24, 26, 28), and
- the same liquid thermoplastic material is applied to said one or more strips (24, 26, 28), thereby bonding said strips (24, 26, 28) together.

13. The paint roller of claim 12, wherein the adhesive and the thermoplastic material comprise polypropylene.

14. The paint roller of claim 12 or 13, wherein said cover (30) comprises a fabric strip wound in a tight helix.

15. The paint roller of claim 12 or 13, wherein said cover (30) comprises fibers blown onto said core (18).

## Patentansprüche

1. Verfahren zur Herstellung einer Anstrichrolle mit den folgenden Schritten:
- Aufwickeln eines oder mehrerer Streifen in Überlappung und in einer gewundenen Bahn auf einen Dorn und Vorwärtsbringen der gewickelten Streifen in einer mit dem Dorn koaxialen Richtung, wodurch ein röhrenförmiger Kern ausgebildet wird,
- Aufbringen eines Klebemittels auf eine äußere Oberfläche des Kerns, und
- Aufbringen einer Überdeckung um den Kern über dem Klebemittel, wodurch die Überdeckung mit dem Kern verbunden und die Rolle ausgebildet wird,
**gekennzeichnet durch** die folgenden Merkmale:
- Ausbilden des röhrenförmigen Kerns (18) aus thermoplastischen Streifen (24, 26, 28), und
- Aufbringen desselben flüssigen thermoplastischen Materials auf den einen oder die mehreren Streifen (24, 26, 28), wodurch die Streifen (24, 26, 28) miteinander verbunden werden.

2. Verfahren nach Anspruch 1, bei dem das Klebemittel ein flüssiges thermoplastisches Material aufweist.

3. Verfahren nach Anspruch 1 oder 2, bei dem das Klebemittel und das thermoplastische Material Polypropylen aufweisen.

4. Verfahren nach einem der Ansprüche 1 bis 3, bei dem der Schritt des Vorwärtsbringens das Umwickeln des Kerns (18) mit einem Gurt (16) und das Drehen des Gurts (16) umfaßt.

5. Verfahren nach einem der Ansprüche 1 bis 4, bei dem der Schritt des Aufbringens einer Überdeckung das Umwickeln des Kerns mit einem Überdeckungsstreifen (30) umfaßt.

6. Verfahren nach einem der Ansprüche 1 bis 4, bei dem der Schritt des Aufbringens einer Überdeckung das Aufblasen von Fasern auf den Kern umfaßt.

7. Einrichtung zum Herstellen von Anstrichrollen (50) mit:
- Einrichtungen zum Aufwickeln eines oder mehrerer Streifen (24, 26, 28) in Überlappung und in einer gewundenen Bahn auf einen Dorn (14) und zum Vorwartsbringen der gewickelten Streifen (24, 26, 28) in einer mit dem Dorn koaxialen Richtung, wodurch ein röhrenförmiger Kern (18) ausgebildet wird,
- Einrichtungen (40) zum Aufbringen eines Klebemittels auf die äußere Oberfläche des Kerns (18) und
- Einrichtungen zum Aufbringen einer Überdeckung (30) um den Kern (18) über dem Klebemittel, wodurch die Überdeckung mit dem Kern (18) verbunden und die Rolle (50) ausgebildet wird,
**gekennzeichnet durch** die folgenden Merkmale:
- die Streifen (24, 26, 28) zum Ausbilden des röhrenförmigen Kerns (18) sind thermoplastische Streifen (24, 26, 28) und
- das gleiche flüssige thermoplastische Material wird auf den einen oder die mehreren Streifen (24, 26, 28) durch eine Zufuhreinrichtung (36, 38) für thermoplastische Flüssigkeit aufgebracht, wodurch die Streifen (24, 26, 28) miteinander verbunden werden.

8. Einrichtung nach Anspruch 7, bei der das Klebemittel ein flüssiges thermoplastisches Material aufweist.

9. Einrichtung nach Anspruch 7 oder 8, bei der das Klebemittel und das thermoplastische Material Polypropylen aufweisen.

10. Einrichtung nach den Ansprüchen 7 bis 9, bei der die Einrichtung zur Aufbringung der Überdeckung einen Streifen (30) um den Kern herum aufbringt.

11. Einrichtung nach den Ansprüchen 7 bis 9, bei der die Einrichtung zum Aufbringung der Überdeckung Fasern auf den Kern aufbläst.

12. Anstrichrolle (50) mit:
- einem röhrenförmigen Kern (18), der durch das Wickeln eines oder mehrerer Streifen (24, 26, 28) in Überlappung und in einer gewundenen Bahn auf einen Dorn und durch das Vorwärtsbringen der gewickelten Streifen in einer mit dem Dorn koaxialen Richtung ausgebildet wird,
- einem auf die äußere Oberfläche des Kerns (18) aufgebrachten Klebemittel, und
- einer Überdeckung (30) um den Kern (18) herum über dem Klebemittel, das die Überdeckung (30) zur Ausbildung der Rolle (50) mit dem Kern (18) verbindet,
**gekennzeichnet durch** die folgenden Merkmale:
- der rollenförmige Kern (18) ist aus den thermoplastischen Streifen (24, 26, 28) ausgebildet, und
- dasselbe flüssige thermoplastische Material wird auf den einen oder die mehreren Streifen (24, 26, 28) aufgebracht, wodurch die Streifen (24, 26, 28) miteinander verbunden werden.

13. Anstrichrolle nach Anspruch 12, bei dem das Klebemittel und das thermoplastische Material Polypropylen aufweisen.

14. Anstrichrolle nach Anspruch 12 oder 13, bei der die Überdeckung (30) einen Cewebestreifen aufweist, der mit einer engen Windung gewickelt ist.

15. Anstrichstrolle nach Anspruch 12 oder 13, bei der die Überdeckung (30) Fasern aufweist, die auf den Kern (18) aufgeblasen werden.

## Revendications

1. Procédé pour fabriquer un rouleau à peinture consistant à :
- enrouler une ou plusieurs bandes en chevauchement et selon un trajet hélicoïdal sur un mandrin et faire avancer lesdites bandes enroulées, dans une direction coaxiale audit mandrin de manière à former un noyau tubulaire,
- appliquer un adhésif à une surface extérieure dudit noyau, et
- appliquer un revêtement autour dudit noyau sur ledit adhésif, de manière à réunir ledit revêtement audit noyau et former ledit rouleau,
caractérisé par les caractéristiques suivantes, consistant à
- former ledit noyau tubulaire (18) avec des bandes thermoplastiques (24, 26, 28), et
- appliquer la même matière thermoplastique liquide auxdites une ou plusieurs bandes (24, 26, 28), de manière à réunir lesdites bandes (24, 26, 28) entre elles.

2. Procédé selon la revendication 1, dans lequel l'adhésif comprend une matière thermoplastique liquide.

3. Procédé selon la revendication 1 ou 2, dans lequel l'adhésif et la matière thermoplastique comprennent du polypropylène.

4. Procédé selon l'une des revendications 1 à 3, dans lequel ladite étape d'avance consiste à enrouler une bande (16) autour du noyau (18) et à faire tourner la bande (16).

5. Procédé selon l'une des revendications 1 à 4, dans lequel ladite étape consistant à appliquer un revêtement comprend l'enroulement d'une bande de revêtement (30) autour du noyau.

6. Procédé selon l'une des revendications 1 à 4, dans lequel ladite étape consistant à appliquer un revêtement comprend l'application, par soufflage, de fibres sur le noyau.

7. Dispositif pour fabriquer des rouleaux à peinture (50) comprenant :
- des moyens pour enrouler une ou plusieurs bandes (24, 26, 28) en chevauchement et selon un trajet hélicoïdal sur un mandrin (14) et faire avancer lesdites bandes enroulées (24, 26, 28) dans une direction coaxiale audit mandrin (14) en formant ainsi un noyau tubulaire (18),
- des moyens (40) pour appliquer un adhésif sur la surface extérieure dudit noyau (18), et
- des moyens pour appliquer un revêtement (30) autour dudit noyau (18) sur ledit adhésif, de manière à réunir ledit revêtement (30) audit noyau (18) et former ledit rouleau (50),
caractérisé par les caractéristiques suivantes
- lesdites bandes (24, 26, 28) servant à former ledit noyau tubulaire (18) sont des bandes thermoplastiques (24, 26, 28), et
- la même matière thermoplastique liquide est appliquée auxdites une ou plusieurs bandes (24, 26,28) par des moyens (36, 38) d'application d'un liquide thermoplastique, pour relier ainsi entre elles lesdites bandes (24, 26, 28).

8. Dispositif selon la revendication 7, dans lequel l'adhésif comprend une matière thermoplastique liquide.

9. Dispositif selon la revendication 7 ou 8, dans lequel l'adhésif et la matière thermoplastique comprennent du polypropylène.

10. Dispositif selon les revendications 7 à 9, dans lequel lesdits moyens d'application de revêtement appliquent une bande (30) autour du noyau.

11. Dispositif selon les revendications 7 à 9, dans lequel lesdits moyens d'application de revêtement appliquent, par soufflage des fibres sur ledit noyau.

12. Rouleau à peinture (50) comprenant :
- un noyau tubulaire (18) formé en enroulant une ou plusieurs bandes (24, 26, 28) en chevauchement et selon un trajet hélicoïdal sur un mandrin et en faisant avancer lesdites bandes enroulées, dans une direction coaxiale audit mandrin,
- un adhésif appliqué sur la surface extérieure dudit noyau (18), et
- un revêtement (30) autour dudit noyau (18) sur ledit adhésif reliant ledit revêtement (30) audit noyau (18) pour former ledit rouleau (50),
caractérisé par les caractéristiques suivantes
- ledit noyau tubulaire (18) est formé de bandes thermoplastiques (24, 26, 28), et
- la même matière thermoplastique liquide est appliquée auxdites une ou plusieurs bandes (24, 26, 28) de manière à réunir entre elles lesdites bandes (24, 26, 28).

13. Rouleau à peinture selon la revendication 12, dans lequel l'adhésif et la matière thermoplastique comprennent du polypropylène

14. Rouleau a peinture selon la revendication 12 ou 13, dans lequel ledit revêtement (30) comprend une bande de tissu enroulée selon une disposition en hélice serrée.

15. Rouleau à peinture selon la revendication 12 ou 13, dans lequel ledit revêtement (30) comprend des fibres appliquées par soufflage sur ledit noyau (18).
